# EUROPÄISCHE PATENTANMELDUNG

(11) **EP 3 670 943 A1**
(43) Veröffentlichungstag der Anmeldung: **24.06.2020**
(21) Anmeldenummer: 18213189.6
(22) Anmeldetag: 17.12.2018
(51) Int. Cl.: F16C 29/04, F16C 33/30, A47B 88/493, A47B 88/45

(54) **TELESKOPSCHIENE MIT MINDESTENS DREI SCHIENENELEMENTEN**

(71) Anmelder: Nadella GmbH, 71154 Nufringen (DE)
(72) Erfinder: Schwertner, Thomas, 82515 Wolfratshausen (DE); Schilli, David, 77797 Ohlsbach (DE)
(74) Vertreter: Pistorius, Richard

(57) **Zusammenfassung**

Bei einer Teleskopschiene 100 mit einer ersten und einer zweiten Führungsschiene 110, 130 und mit einer Zwischenschiene 120, wobei die erste Führungsschiene 110 an einer ersten Laufbahn der Zwischenschiene zwangsgeführt ist und die zweite Führungsschiene 130 an einer zweiten, zur ersten Laufbahn parallel verlaufenden Laufbahn der Zwischenschiene zwangsgeführt ist, sind die erste und zweite Führungsschiene sowie die Zwischenschiene über mindestens zwei längliche Verbindungselemente bei einem Bewegen von einer zusammengefahrenen Position in eine ausgefahrene Position, oder umgekehrt, synchronisiert, wobei an der ersten Führungsschiene ein erstes Ende 431 eines ersten Verbindungselements 421 sowie ein zweites Ende 432 eines zweiten Verbindungselements 422 und an der zweiten Führungsschiene ein zweites Ende 432 des ersten Verbindungselements 421 sowie ein erstes Ende 431 des zweiten Verbindungselements 422 jeweils über zugeordnete Befestigungselemente 320, 410 fixiert sind, und wobei die zugeordneten Befestigungselemente als Verfahrwegsbegrenzung der ersten und zweiten Führungsschiene an der Zwischenschiene in der ausgefahrenen Position ausgebildet sind.

## Beschreibung

Die vorliegende Erfindung betrifft eine Teleskopschiene mit einer ersten und einer zweiten Führungsschiene und mit einer Zwischenschiene, wobei die erste Führungsschiene an einer ersten Laufbahn der Zwischenschiene zwangsgeführt ist und die zweite Führungsschiene an einer zweiten, zur ersten Laufbahn parallel verlaufenden Laufbahn der Zwischenschiene zwangsgeführt ist.

Aus dem Stand der Technik, z.B. aus den Dokumenten US 3,687,505, DE 42 26 812 B4, US 2016/0128475 A1, US 3,078,129, DE 10 2012 009 296 B4, DE 20 2015 100 603 U1 und EP 1 571 357 A1, DE 10 2014 119 729 A1, US 5,492,400, EP 0 046 531 A2, US 2016/0128472 A1, ist eine derartige Teleskopschiene mit einer ersten und zweiten Führungsschiene sowie einer Zwischenschiene bekannt. Dabei ist die Zwischenschiene jeweils mit zwei Laufbahnen versehen, an denen die Führungsschienen zwangsgeführt sind.

Nachteilig ist bei diesen gebräuchlichen Teleskopschienen jedoch, dass die Führungsschienen in der Regel nicht auf geeignete Art und Weise miteinander synchronisiert sind. Dies kann insbesondere bei einem Verfahren der Teleskopschiene von der zusammengefahrenen Position in die ausgefahrene Position zu einem ungleichmäßigen und unvollständigen Ausfahren der Teleskopschiene führen.

Es ist deshalb eine Aufgabe der vorliegenden Erfindung, eine Teleskopschiene mit einer ersten und einer zweiten Führungsschiene und mit einer Zwischenschiene bereitzustellen, bei der die erste und zweite Führungsschiene auf geeignete Art und Weise miteinander synchronisiert sind.

Diese Aufgabe wird gelöst durch eine Teleskopschiene gemäß der vorliegenden Erfindung. Hierbei weist die Teleskopschiene erfindungsgemäß eine erste und eine zweite Führungsschiene und eine Zwischenschiene auf, wobei die erste Führungsschiene an einer ersten Laufbahn der Zwischenschiene zwangsgeführt ist und die zweite Führungsschiene an einer zweiten, zur ersten Laufbahn parallel verlaufenden Laufbahn der Zwischenschiene zwangsgeführt ist. Die erste und zweite Führungsschiene sowie die Zwischenschiene sind über mindestens zwei längliche Verbindungselemente bei einem Bewegen von einer zusammengefahrenen Position in eine ausgefahrene Position, oder umgekehrt, synchronisiert, wobei an der ersten Führungsschiene ein erstes Ende eines ersten Verbindungselements sowie ein zweites Ende eines zweiten Verbindungselements, und an der zweiten Führungsschiene ein zweites Ende des ersten Verbindungselements sowie ein erstes Ende des zweiten Verbindungselements jeweils über zugeordnete Befestigungselemente fixiert sind, und wobei die zugeordneten Befestigungselemente als Verfahrwegsbegrenzung der ersten und zweiten Führungsschiene an der Zwischenschiene in der ausgefahrenen Position ausgebildet sind.

Die Erfindung ermöglicht somit die Bereitstellung einer Teleskopschiene, bei der durch die Befestigungselemente einfach und unkompliziert eine Synchronisierung der Führungsschienen erreicht werden kann. Somit kann ein gleichmäßiges und sicheres Verfahren von der zusammengefahrenen Position in die ausgefahrene Position, oder umgekehrt, ermöglicht werden.

Bevorzugt ist zumindest ein zugeordnetes Befestigungselement an einer der Zwischenschiene zugewandten Längsseite der ersten und/oder zweiten Führungsschiene angeordnet. Somit kann einfach und unkompliziert die Bereitstellung einer kompakten Anordnung mit dem zumindest einen Befestigungselement ermöglicht werden.

Zumindest ein zugeordnetes Befestigungselement ist vorzugsweise an der ersten und/oder zweiten Führungsschiene angeschraubt. Somit kann eine sichere und zuverlässige Befestigung des zumindest einen Befestigungselements an der ersten und/oder zweiten Führungsschiene ermöglicht werden.

Gemäß einer Ausführungsform weist zumindest ein zugeordnetes Befestigungselement eine Ausnehmung zur abschnittsweisen Aufnahme eines Endes des ersten und/oder zweiten Verbindungselements auf. Somit kann auf einfache Art und Weise eine Befestigung eines Endes des Verbindungselements an einem zugeordneten Befestigungselement ermöglicht werden.

Bevorzugt ist an dem zweiten Ende des ersten Verbindungselements und/oder dem zweiten Ende des zweiten Verbindungselements eine Spannvorrichtung zum manuellen Spannen des ersten und/oder zweiten Verbindungselements vorgesehen. Somit kann einfach und unkompliziert eine geeignete Spannung der Verbindungselemente eingestellt werden.

Die erste und/oder zweite Führungsschiene weisen vorzugsweise im Bereich der Spannvorrichtung eine Ausnehmung zum Bedienen der Spannvorrichtung auf. Somit kann die Spannvorrichtung auf unkomplizierte und komfortable Art und Weise bedient werden.

Gemäß einer Ausführungsform ist das erste und/oder zweite Verbindungselement nach Art eines Seils, eines Riemens und/oder einer Kette ausgebildet. Somit kann ein kostengünstiges und sicheres Verbindungselement bereitgestellt werden.

Vorzugsweise ist das erste und/oder zweite Verbindungselement dazu ausgebildet, Druckkräfte und/oder Zugkräfte aufzunehmen. Somit kann ein robustes und stabiles Verbindungselement bereitgestellt werden.

Die Zwischenschiene weist bevorzugt an jedem ihrer Enden zumindest eine Rolle zum Umlenken des ersten und/oder zweiten Verbindungselements auf. Somit kann auf einfache Art und Weise eine Führungsschiene mit der Zwischenschiene verbunden werden, wodurch die Zwangsführung der entsprechenden Führungsschiene an der Zwischenschiene ermöglicht werden kann.

Gemäß einer Ausführungsform sind die zumindest zwei Rollen dazu ausgebildet, ein Drehmoment zu übertragen. Somit kann ein sicheres und zuverlässiges Verfahren der Teleskopschiene ermöglicht werden.

Vorzugsweise weisen die erste und zweite Führungsschiene sowie die Zwischenschiene jeweils eine Länge auf, die einer ersten Länge der Teleskopschiene in der zusammengefahrenen Position entspricht, wobei die Teleskopschiene in der ausgefahrenen Position eine zweite Länge aufweist, die zumindest annähernd der doppelten ersten Länge entspricht, und wobei ein relativer Verfahrweg zwischen der ersten Führungsschiene und der Zwischenschiene sowie der zweiten Führungsschiene und der Zwischenschiene zum Bewegen der Teleskopschiene von der zusammengefahrenen Position in die ausgefahrene Position, oder umgekehrt, jeweils zumindest annähernd der Hälfte der ersten Länge entspricht. Somit kann eine Hubverkürzung ermöglicht werden, wodurch eine kompakte Teleskopschiene bereitgestellt werden kann.

Vorzugsweise sind die erste und zweite Führungsschiene jeweils über Wälzkörper an der Zwischenschiene geführt. Somit kann ein leichtes und reibungsarmes Verfahren der Teleskopschiene bzw. der Führungsschienen an der Zwischenschiene ermöglicht werden.

Die Wälzkörper sind bevorzugt in einem Kugelkäfig angeordnet. Somit kann eine einfache und unkomplizierte Anordnung der Wälzkörper ermöglicht werden.

Gemäß einer Ausführungsform ist die Zwischenschiene über eine direkte Anbindung mit einer translatorischen Bewegungseinheit verbindbar. Somit kann auf einfache Art und Weise eine Anbindung an einen Antrieb zum Verfahren der Teleskopschiene in die zusammengefahrene und/oder ausgefahrene Position ermöglicht werden.

Die Erfindung ist anhand von in den Zeichnungen dargestellten Ausführungsbeispielen in der nachfolgenden Beschreibung näher erläutert. Es zeigen:
- Fig. 1: eine perspektivische Seitenansicht einer erfindungsgemäßen Teleskopschiene,
- Fig. 2: einen vergrößerten Ausschnitt der Teleskopschiene von Fig. 1,
- Fig. 3: eine Seitenansicht des Ausschnitts von Fig. 2 zur Verdeutlichung eines Befestigungselements,
- Fig. 4: eine perspektivische Ansicht des Ausschnitts von Fig. 3,
- Fig. 5: eine Seitenansicht eines Ausschnitts der Teleskopschiene von Fig. 1 mit einem weiteren Befestigungselement,
- Fig. 6: eine schematische Draufsicht auf die Teleskopschiene von Fig. 1 mit den Befestigungselementen von Fig. 3 und Fig. 5 in einer zusammengefahrenen Position,
- Fig. 7: eine schematische Draufsicht auf die Teleskopschiene von Fig. 6 in einer ausgefahrenen Position,
- Fig. 8: eine schematische Draufsicht auf eine weitere Teleskopschiene mit den Befestigungselementen von Fig. 3 und Fig. 5 in einer zusammengefahrenen Position,
- Fig. 9: eine schematische Draufsicht auf die Teleskopschiene von Fig. 8 in einer ausgefahrenen Position,
- Fig. 10: eine schematische Ansicht der Teleskopschiene von Fig. 9, und
- Fig. 11: eine perspektivische Ansicht der Teleskopschiene von Fig. 1 in der zusammengefahrenen und der ausgefahrenen Position.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

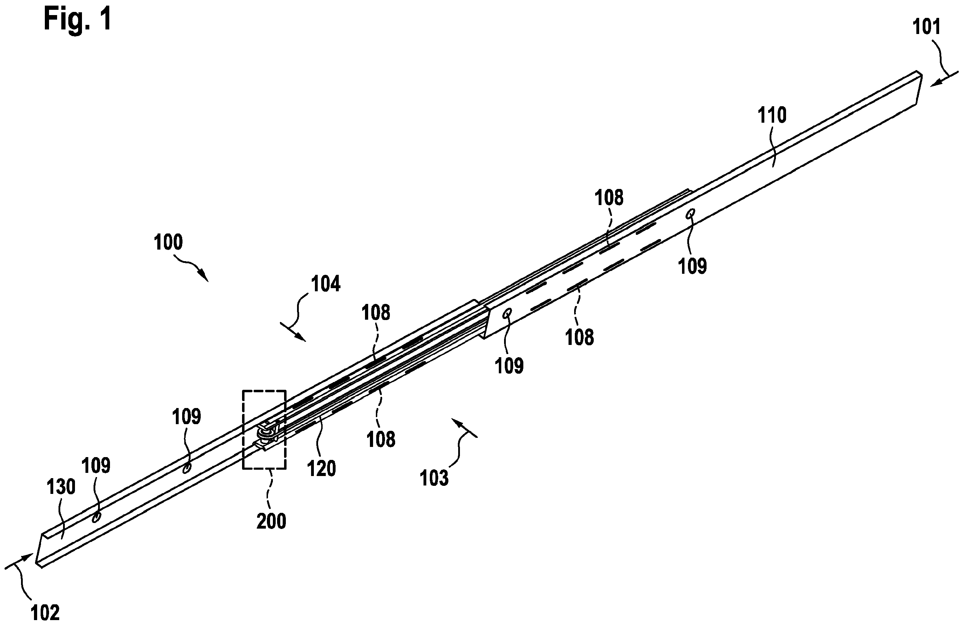

Fig. 1 zeigt eine erfindungsgemäße Teleskopschiene 100 mit einem ersten axialen Ende 101 und einem zweiten axialen Ende 102, sowie einer illustrativ vorderen Seite 103 und einer illustrativ hinteren Seite 104. Die Teleskopschiene 100 weist vorzugsweise zumindest eine erste und zweite Führungsschiene 110, 130 sowie mindestens eine Zwischenschiene 120 auf.

In Fig. 1 ist eine illustrativ rechts angeordnete erste Führungsschiene 110 sowie eine illustrativ links angeordnete zweite Führungsschiene 130 gezeigt. Dabei ist die erste Führungsschiene 110 der vorderen Seite 103 zugewandt angeordnet, und die zweite Führungsschiene 130 ist der hinteren Seite 104 zugewandt angeordnet. Erfindungsgemäß sind die erste und zweite Führungsschiene 110, 130 an der Zwischenschiene 120 zwangsgeführt.

Es wird darauf hingewiesen, dass in Fig. 1 zur Vereinfachung der Zeichnung lediglich eine einzelne Zwischenschiene 120 gezeigt ist, sodass nachfolgend zwecks Einfachheit und Klarheit nur auf "die Zwischenschiene 120" Bezug genommen wird. Allerdings können auch zwei oder mehr Zwischenschienen Anwendung finden, wobei diese dann zumindest teilweise aneinander zwangsgeführt werden.

Bevorzugt weisen die erste und zweite Führungsschiene 110, 130 sowie die Zwischenschiene 120 ein offenes Profil auf. Die erste und zweite Führungsschiene 110, 130 weisen dabei vorzugsweise ein C-förmiges, U-förmiges, doppel-T-förmiges oder ein flaches Profil auf.

Die Zwischenschiene 120 weist bevorzugt ein U-förmiges, S-förmiges oder doppel-T-förmiges Profil auf. Dabei kann die Zwischenschiene 120 einstückig oder mehrstückig, z.B. zweistückig, ausgebildet sein. Bei einer beispielhaften zweistückigen Ausführungsform der Zwischenschiene 120 weist diese vorzugsweise zwei U-Profile oder zwei C-förmige Profile auf, die über eine beliebige Verbindung, z.B. eine Schweißverbindung, miteinander verbunden sind.

Die erste und zweite Führungsschiene 110, 130 weisen vorzugsweise jeweils zumindest ein Befestigungselement 109 auf. Das Befestigungselement 109 ist bevorzugt nach Art einer Ausnehmung, einer Schraube und/oder eines Stifts ausgebildet. Das Befestigungselement 109 ist dabei vorzugsweise dazu ausgebildet, eine Befestigung der Teleskopschiene 100 über eine Führungsschiene 110, 130 an einem Gegenstand zu ermöglichen und/oder eine Verbindung der Teleskopschiene 100 mit einem zu bewegenden Gegenstand zu ermöglichen.

Vorzugsweise ist zumindest eine Führungsschiene 110, 130 über Wälzkörper 108 an der Zwischenschiene 120 geführt. Illustrativ und vorzugsweise sind die erste und zweite Führungsschiene 110, 130 über Wälzkörper 108 an der Zwischenschiene 120 geführt. Dabei sind die Wälzkörper 108 vorzugsweise in einem Wälzkörperkäfig angeordnet bzw. bilden vorzugsweise einen Wälzkörperkäfig aus.

Der Wälzkörperkäfig ist bevorzugt dazu ausgebildet, die Wälzkörper 108 derart zueinander anzuordnen, dass die einzelnen Wälzkörper 108 sich nicht berühren. Hierbei kann ein Wälzkörperkäfig an einer illustrativ oberen und/oder unteren Wälzfläche der jeweiligen Führungsschiene 110, 130 angeordnet sein. Jedoch kann der Wälzkörperkäfig auch derart ausgebildet sein, dass er illustrativ obere und untere Wälzkörper 108 miteinander verbindet.

Gemäß einer Ausführungsform sind die Wälzkörper 108 nach Art von Kugeln, Kegeln, Nadeln usw. ausgebildet. Durch die Wälzkörper 108 ist eine mehrachsige Lastaufnahme möglich. Dabei wird eine formschlüssige Synchronisierung realisiert, die keine Rutschkupplung erfordert. Die Synchronisierung ist dabei zumindest abschnittsweise in der Teleskopschiene 100 angeordnet, bevorzugt komplett in der Teleskopschiene 100 platziert.

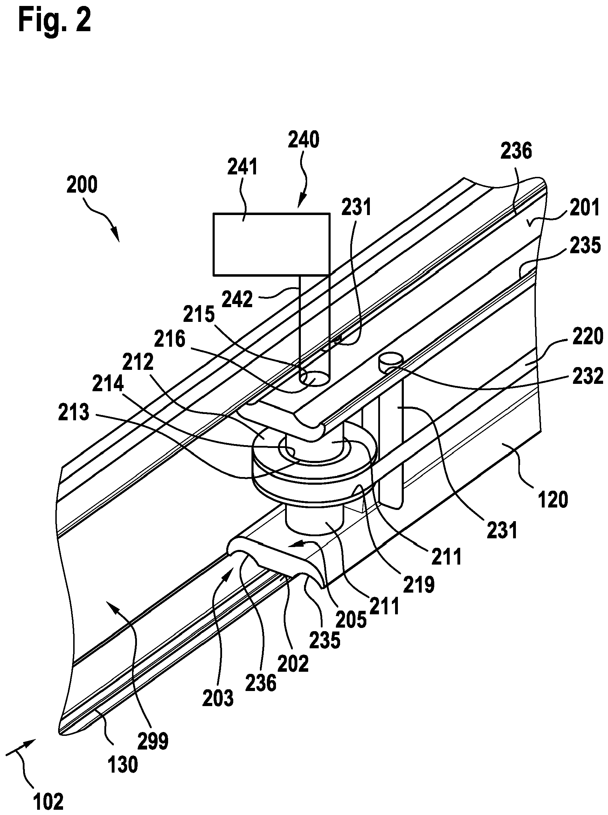

Der Wälzkörperkäfig bewegt sich bei einem Verfahren der Teleskopschiene 100 mit der jeweiligen Führungsschiene 110, 130 mit. Des Weiteren zeigt Fig. 1 einen Ausschnitt 200, der nachfolgend in Fig. 2 beschrieben wird.

Fig. 2 zeigt den Ausschnitt 200 von Fig. 1 mit der Zwischenschiene 120 und der zweiten Führungsschiene 130. Die Zwischenschiene 120 weist exemplarisch und vorzugsweise eine Doppel-T-Träger-Form auf und ist illustrativ an einer Innenseite 299 der zweiten Führungsschiene 130, bzw. der Teleskopschiene 100 von Fig. 1, angeordnet.

Illustrativ weist die Zwischenschiene 120 eine obere Seite 201 und eine untere Seite 202 auf, wobei zumindest an der oberen Seite 201 und/oder unteren Seite 202 eine erste Laufbahn 235 und eine zweite Laufbahn 236 zum Zwangsführen der ersten und zweiten Führungsschiene 110, 130 vorgesehen ist. Beispielhaft weist die Zwischenschiene 120 in Fig. 2 eine erste Laufbahn 235 auf der oberen Seite 201 und der unteren Seite 202 auf, wobei die erste Laufbahn 235 exemplarisch im Bereich des linken Endes der oberen und unteren Seite 201, 202 angeordnet ist und zum Führen der ersten Führungsschiene 110 ausgebildet ist. Die zweite Laufbahn 236 ist vorzugsweise parallel zur ersten Laufbahn 235 angeordnet, wobei die zweite Laufbahn 236 illustrativ an einem linken Ende der Zwischenschiene 120 angeordnet ist und zum Führen der zweiten Führungsschiene 130 ausgebildet ist.

Illustrativ weisen die Laufbahnen 235, 236 jeweils eine halbrunde Form auf, sie können jedoch auch eine V-förmige und/oder trapezförmige Form aufweisen. Des Weiteren können die erste und zweite Führungsschiene 110, 130 an ihrer jeweils der Zwischenschiene 120 zugewandten Seite ebenfalls eine Laufbahn aufweisen. Die erste und/oder zweite Laufbahn 235, 236 sind dabei zur Anordnung der Wälzkörper 108 von Fig. 1 ausgebildet. Dabei wird zumindest ein 2-Punkt-Kontakt der Wälzkörper 108 mit der Laufbahn 235, 236 ausgebildet. Vorzugsweise wird ein 3-Punkt-Kontakt oder ein 4-Punkt-Kontakt der Wälzkörper 108 mit der Laufbahn 235, 236 ausgebildet.

Bevorzugt weisen die Laufbahnen 235, 236 einen Herausfallschutz auf. Dieser ist vorzugsweise nach Art eines Stiftes 231 ausgebildet, der bevorzugt in einer Ausnehmung 232, die in der Laufbahn 235, 236 ausgebildet ist, angeordnet ist. Dabei kann der Stift 231 einer illustrativ oberen und/oder unteren Laufbahn 235, 236 zugeordnet sein.

Illustrativ ist der Stift 231 als Herausfallschutz der oberen und unteren Laufbahn 235, 236 ausgebildet. Jedoch kann der Stift 231 auch entweder nur der oberen oder nur der unteren Laufbahn 235, 236 zugeordnet sein, wobei der Stift 231 nicht durchgängig ausgebildet ist.

Des Weiteren kann auch lediglich ein Stift 231 als Herausfallschutz einer Führungsschiene 110, 130 vorgesehen sein. Dabei kann z.B. ein Stift 231 der oberen, linken Laufbahn 235 und ein Stift 231 der unteren, rechten Laufbahn 236 zugeordnet sein. Es wird jedoch darauf hingewiesen, dass dabei die Stifte 231 auch jeweils nur auf der oberen oder unteren Laufbahn 235, 236 angeordnet sein können.

Bevorzugt weisen die Führungsschienen 110, 130 und/oder der Wälzkörperkäfig eine Gegenkontur zum Herausfallschutz bzw. zum Stift 231 auf. Die Gegenkontur kann dabei als Schraube, Stift, Platte und/oder als eingedrückte Stelle ausgebildet sein.

Die erste und zweite Führungsschiene 110, 130 sowie die Zwischenschiene 120 sind bevorzugt über mindestens zwei längliche Verbindungselemente 220 bei einem Bewegen von einer zusammengefahrenen Position in eine ausgefahrene Position, oder umgekehrt, synchronisiert. Die mindestens zwei länglichen Verbindungselemente 220 sind vorzugsweise nach Art eines Seils, eines Riemens und/oder einer Kette ausgebildet.

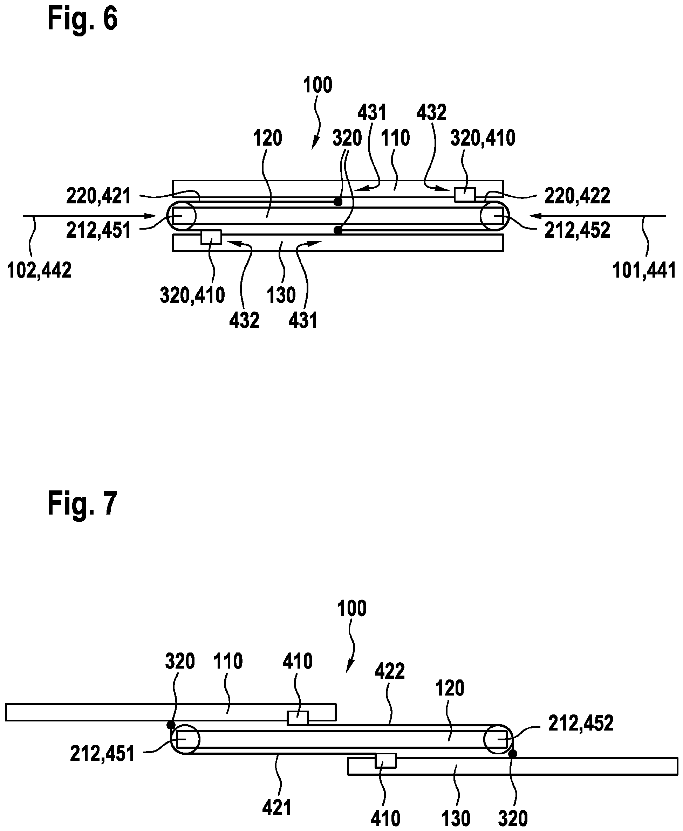

Darüber hinaus sind die mindestens zwei länglichen Verbindungselemente 220 bevorzugt dazu ausgebildet, Druckkräfte und/oder Zugkräfte aufzunehmen. Vorzugsweise weist die Zwischenschiene 120 an jedem ihrer Enden (441, 442 in Fig. 6) zumindest eine Rolle 212 zum Umlenken von mindestens einem Verbindungselement 220 auf.

Die zumindest zwei Rollen 212 sind bevorzugt dazu ausgebildet, ein Drehmoment zu übertragen. Dabei sind die Rollen 212 vorzugsweise antreibbar, bevorzugt elektrisch, mechanisch, pneumatisch und/oder hydraulisch.

Illustrativ weist die Zwischenschiene 120 an ihren axialen Enden 203 jeweils eine Ausnehmung 205 zur Anordnung der Rolle 212 auf. Die Rolle 212 ist dabei vorzugsweise über zumindest ein Lagerelement 213, das illustrativ in einer Aufnahme 214 der Rolle 212 angeordnet ist, auf einem Rotationsübertragungselement 211 angeordnet.

Bevorzugt ist das Rotationsübertragungselement 211 als Welle oder Achse ausgebildet. Dabei kann eine Welle ein Moment aufnehmen und eine Achse nicht. Das Rotationsübertragungselement 211 kann jedoch auch außermittig an der Zwischenschiene 120 angeordnet sein.

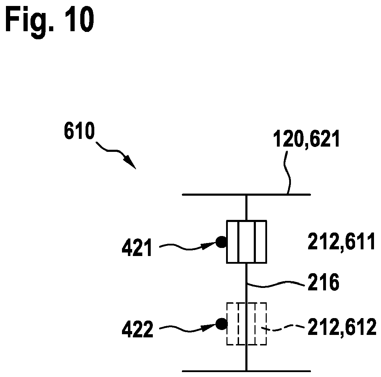

Die Rolle 212 ist bevorzugt fest an der Zwischenschiene 120 angeordnet. Insbesondere ist die Rolle 212 vorzugsweise horizontal an der Zwischenschiene 120 angeordnet. Illustrativ und vorzugsweise ist die Rolle 212 mittig zwischen der oberen Seite 201 und der unteren Seite 202 der Zwischenschiene 120 angeordnet. Jedoch kann die Rolle 212 auch außermittig angeordnet sein, wie beispielhaft bei Fig. 10 beschrieben. Darüber hinaus weist die Rolle 212 bevorzugt eine Aufnahme 219 zum Führen von zumindest einem Verbindungselement 220 auf.

Des Weiteren ist die Rolle 212 vorzugsweise über eine Drehachse 216 mit einer Antriebseinheit 240, z.B. einem Elektromotor 241, verbunden. Dabei ist die Antriebseinheit 240 als translatorische Bewegungseinheit ausgebildet, die nach dem Prinzip des umgekehrten Flaschenzugs arbeitet, d. h. mit doppelter Kraft und dem halben Verfahrweg wird die Teleskopschiene 100 von Fig. 1 komplett ausgefahren bzw. von der zusammengefahrenen Position in die ausgefahrene Position bewegt. Somit kann im Vergleich zum Stand der Technik vorteilhafterweise eine Bauraumreduzierung ermöglicht werden.

Die Drehachse 216 ist dabei bevorzugt in einer Ausnehmung 215 der Zwischenschiene 120 angeordnet bzw. gelagert. Die Ausnehmung 215 ist vorzugsweise an der oberen und unteren Seite 201, 202 der Zwischenschiene 120 ausgebildet.

Darüber hinaus ist die Drehachse 216 vorzugsweise mit einem Antriebselement 242 der Antriebseinheit 240 verbunden. Bevorzugt ist das Rotationsübertragungselement 211 mit der Drehachse 216 drehverbunden. Darüber hinaus ist die Rolle 212 vorzugsweise mittelbar mit der Zwischenschiene 220 verbunden. Dabei wird ein Formschluss ausgebildet.

Es wird jedoch darauf hingewiesen, dass das Lagerelement 213 auch in der Aufnahme 215 angeordnet sein kann. Dabei ist die Rolle 212 direkt mit der Drehachse 216 verbunden.

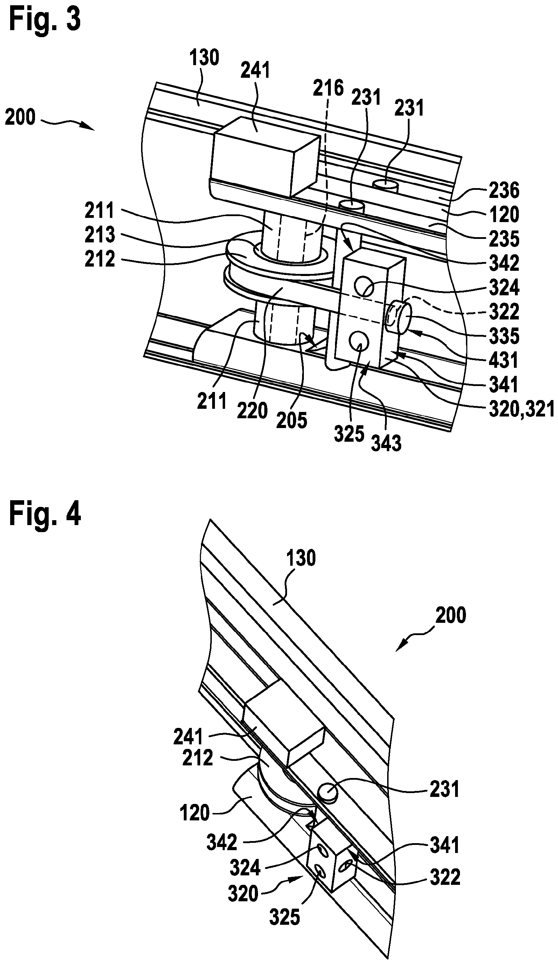

Fig. 3 zeigt den Ausschnitt 200 von Fig. 1 und Fig. 2, zwecks Einfachheit und Übersichtlichkeit jedoch ohne die erste Führungsschiene 110. Dabei verdeutlicht Fig. 3 Mittel zur Befestigung des Verbindungselements 220, bzw. eines Endes 431 des Verbindungselements 220, an der hier nicht dargestellten ersten Führungsschiene 110.

Bevorzugt ist ein Ende 431 des Verbindungselements 220 über zumindest ein zugeordnetes Befestigungselement 320 an der jeweils zugeordneten Führungsschiene 110, 130 befestigt. Das zumindest eine zugeordnete Befestigungselement 320 weist vorzugsweise einen rechteckigen Grundkörper 321 auf.

Bevorzugt ist das zumindest eine zugeordnete Befestigungselement 320 an einer der Zwischenschiene 120 zugewandten Längsseite 299 der ersten und/oder zweiten Führungsschiene 110, 130 angeordnet. Dabei liegt eine dem zumindest einen Befestigungselement 320 zugeordnete Anlagefläche 343 an der jeweiligen Längsseite 299 der jeweiligen Führungsschiene 110, 130 an.

Vorzugsweise ist das zumindest eine zugeordnete Befestigungselement 320 an der ersten und/oder zweiten Führungsschiene 110, 130 angeschraubt. Hierfür weist das zumindest eine Befestigungselement 320 mindestens eine, bevorzugt zwei Ausnehmungen 324, 325 zur Anordnung eines Schraubelements auf. Bevorzugt sind die Ausnehmungen 324, 325 als Sacklochbohrungen ausgebildet.

Es wird jedoch darauf hingewiesen, dass das zumindest eine Befestigungselement 320 auch auf eine beliebig andere Art und Weise an der jeweiligen Führungsschiene 110, 130 angeordnet werden kann. So kann das zumindest eine Befestigungselement 320 beispielhaft auch durch eine Klebeverbindung an der jeweiligen Führungsschiene 110, 130 angeordnet sein. Darüber hinaus kann das zumindest eine Befestigungselement 320 auch einstückig mit der jeweiligen Führungsschiene ausgebildet sein.

Illustrativ weist das Befestigungselement 320 ein erstes und zweites axiales Ende 341, 342 auf. Dabei ist das erste axiale Ende 341 dem ersten Ende 101 der Teleskopschiene 100 zugewandt angeordnet, und das zweite axiale Ende 342 ist dem zweiten Ende 102 der Teleskopschiene 100 zugewandt angeordnet. Bevorzugt weist das Befestigungselement 320 in axialer Richtung eine als Durchgangsbohrung ausgebildete Ausnehmung 322 auf. Die Durchgangsbohrung 322 ist vorzugsweise zur abschnittsweisen Aufnahme des Verbindungselements 220 ausgebildet, insbesondere zur abschnittsweisen Aufnahme eines Endes 431 des Verbindungselements 220.

In der in Fig. 3 gezeigten, ausgefahrenen Position der Teleskopschiene 100 liegt illustrativ das zweite axiale Ende 342 des Befestigungselements 320 abschnittsweise an dem Stift 231 an, der in der Laufbahn 235 angeordnet ist. Darüber hinaus liegt bevorzugt ein Blockierelement 335 des Verbindungselements 220 am ersten Ende 341 des Befestigungselements 320 an.

Das Blockierelement 335 weist vorzugsweise einen größeren Grundkörper auf, als die Ausnehmung 322 des Befestigungselements 320. Dabei ist das Blockierelement 335 bevorzugt dazu ausgebildet, das Verbindungselement 220 am Befestigungselement 320 zu fixieren. Vorzugsweise ist das Blockierelement 335 an dem Ende 431 des Verbindungselements 220 angeordnet, insbesondere aufgepresst.

Illustrativ ist die Ausnehmung 322 in horizontaler Richtung des Befestigungselements 320 zwischen den Ausnehmungen 324, 325 angeordnet. Es wird jedoch darauf hingewiesen, dass die Ausnehmung 322 auch außermittig angeordnet werden kann. Insbesondere ist die Ausnehmung 322 analog zur Position der Rolle 212 angeordnet.

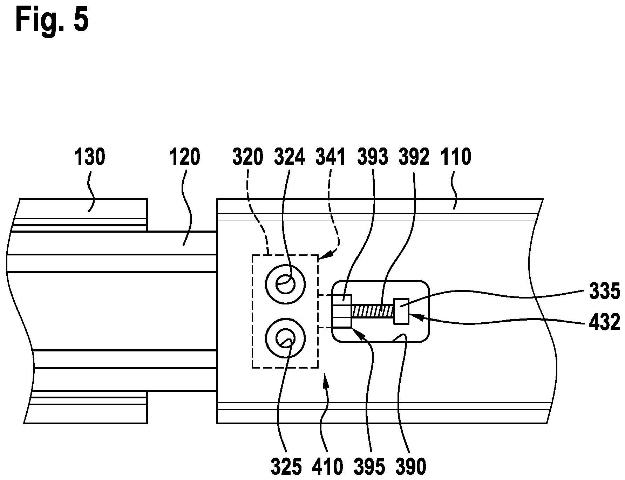

Es wird darauf hingewiesen, dass auch lediglich ein Befestigungselement 320 (und 410 in Fig. 5) an einer Führungsschiene 110, 130 angeordnet sein kann. Dabei kann das Befestigungselement 320 (und 410 in Fig. 5) derart ausgebildet sein, dass eine feste Anordnung des Verbindungselements 220 sowie einer Spannvorrichtung (395 in Fig. 5) ermöglicht werden kann.

Fig. 4 zeigt den Ausschnitt 200 von Fig. 3, zwecks Einfachheit und Übersichtlichkeit jedoch ohne das Verbindungselement 220. Dabei verdeutlicht Fig. 4 die Anordnung des Befestigungselements 320 an dem Stift 231 in der ausgefahrenen Position der Teleskopschiene 100. Hierbei zeigt Fig. 4 die Anordnung der Ausnehmung 322, die bevorzugt mittig zur Ausnehmung 324, 325 angeordnet ist.

Fig. 5 zeigt das zweite axiale Ende der Führungsschiene 110 von Fig. 1, wobei dem Befestigungselement 320 von Fig. 3 bevorzugt eine Spannvorrichtung 395 zugeordnet ist. Die Spannvorrichtung 395 ist zum manuellen Spannen des ersten und/oder zweiten Verbindungselements 220 von Fig. 3 ausgebildet. Das Befestigungselement 320 und die Spannvorrichtung 395 bilden dabei vorzugsweise eine Befestigungseinheit 410 aus.

Bevorzugt weist die Führungsschiene 110 im Bereich der Spannvorrichtung 395 eine Ausnehmung 390 zum Bedienen der Spannvorrichtung 395 auf. Analog zum ersten Ende 431 des Verbindungselements 220 weist ein zweites Ende 432 exemplarisch das Blockierelement 335 auf.

Der Spannvorrichtung 395 ist vorzugsweise eine Gewindehülse 392 zugeordnet, die bevorzugt auf einem Außendurchmesser des Verbindungselements 220 angeordnet ist. Zum Spannen der Spannvorrichtung 395 bzw. des Verbindungselements 220 ist vorzugsweise eine Spannmutter 393 vorgesehen, die bevorzugt auf dem Gewinde der Gewindehülse 392 angeordnet ist. Die Spannmutter 393 liegt dabei illustrativ an der Seite 341 des Befestigungselements 320 an.

Fig. 6 zeigt die Teleskopschiene 100 von Fig. 1 mit der ersten und zweiten Führungsschiene 110, 130 sowie der Zwischenschiene 120 in der zusammengefahrenen Position. Dabei verdeutlicht Fig. 6 die Anordnung des Befestigungselements 320 bzw. der Befestigungseinheit 410 von Fig. 5.

Illustrativ und vorzugsweise ist an der ersten Führungsschiene 110 ein erstes Ende 431 eines ersten Verbindungselements 421 sowie ein zweites Ende 432 eines zweiten Verbindungselements 422 jeweils über zugeordnete Befestigungselemente 320, 410 fixiert. Darüber hinaus ist an der zweiten Führungsschiene 130 bevorzugt ein zweites Ende 432 des ersten Verbindungselements 421 sowie ein erstes Ende 431 des zweiten Verbindungselements 422 über zugeordnete Befestigungselemente 320, 410 fixiert. Hierbei sind die zugeordneten Befestigungselemente 320, 410 vorzugsweise als Verfahrwegsbegrenzung der ersten und zweiten Führungsschiene 110, 130 an der Zwischenschiene 120 in der ausgefahrenen Position ausgebildet.

Bevorzugt sind die Befestigungselemente 320 mittig auf der ersten und zweiten Führungsschiene 110, 130 angeordnet. Darüber hinaus sind die Befestigungseinheiten 410 vorzugsweise jeweils an einem axialen Ende der ersten und zweiten Führungsschiene 110, 130 angeordnet.

Das Verbindungselement 421 ist illustrativ und vorzugsweise über das Befestigungselement 320 mittig an der ersten Führungsschiene 110 angeordnet und verläuft über eine Rolle 451 zur zweiten Führungsschiene 130. An der zweiten Führungsschiene 130 ist das Verbindungselement 421 über eine Befestigungseinheit 410 angeordnet.

Die Befestigungseinheit 410 ist dabei bevorzugt an der zweiten Führungsschiene 130 und dem zweiten Ende 102 der Teleskopschiene 100 zugewandt angeordnet. Des Weiteren ist vorzugsweise das zweite Verbindungselement 422 mit seinem zweiten Ende 432 an einem dem ersten Ende 101 der Teleskopschiene 100 zugewandten Ende der ersten Führungsschiene 110 befestigt.

Das Verbindungselement 422 wird vorzugsweise über eine Rolle 452 zur zweiten Führungsschiene 130 umgelenkt und ist dort bevorzugt über ein Befestigungselement 320 illustrativ mittig befestigt. Dabei ist das Verbindungselement 422 an seinem ersten axialen Ende 431 exemplarisch mittig an der zweiten Führungsschiene 130 angeordnet.

Illustrativ ist das zweite Ende 432 des Verbindungselements 421 an einem dem zweiten Ende 102 der Teleskopschiene 100 zugewandten zweiten Ende der Führungsschiene 442 angeordnet. Darüber hinaus ist das zweite Ende 432 des Verbindungselements 422 bevorzugt an einem dem ersten axialen Ende 101 der Teleskopschiene 100 zugewandten Ende 441 der ersten Führungsschiene 110 angeordnet.

Es wird jedoch darauf hingewiesen, dass die Befestigungseinheiten 410 der Verbindungselemente 421, 422 auch an einem gegenüberliegenden Ende der jeweiligen Führungsschiene 110, 130 angeordnet sein können. Des Weiteren können die Befestigungseinheiten 410 auch mittig an der jeweiligen Führungsschiene 110, 130 angeordnet sein, wobei die ersten Enden 431 der jeweiligen Verbindungselemente 421, 422 an einem axialen Ende der jeweils gegenüberliegenden Führungsschiene 110, 130 angeordnet sind.

Illustrativ sind in Fig. 6 zwei Verbindungselemente 220 bzw. 421, 422 gezeigt. Es wird jedoch darauf hingewiesen, dass die Teleskopschiene 100 auch mehr als zwei Verbindungselemente 220 aufweisen kann. So können die erste und zweite Führungsschiene 110, 130 z.B. auch jeweils über zwei Verbindungselemente 421, 422 verbunden sein.

Fig. 7 zeigt die Teleskopschiene 100 von Fig. 6 in der ausgefahrenen Position. Bei einem Bewegen von der zusammengefahrenen Position in die ausgefahrene Position der Teleskopschiene 100 ist vorzugsweise eine der Führungsschienen 110, 130 fest angeordnet und die Zwischenschiene 120 sowie die entsprechend andere der Führungsschienen 130, 110 können in axialer Richtung verschoben bzw. verfahren werden.

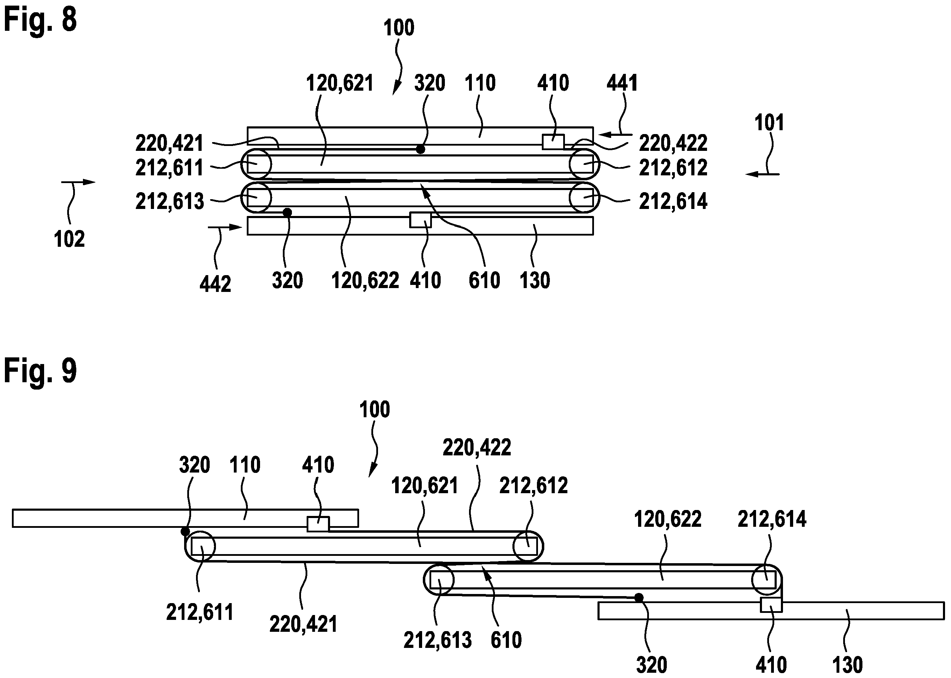

Fig. 8 zeigt die Teleskopschiene 100 von Fig. 1 mit der ersten und zweiten Führungsschiene 110, 130 sowie der Zwischenschiene 120. Im Gegensatz zu Fig. 1 weist die Zwischenschiene 120 nun jedoch zwei Schienenelemente 621, 622 auf, bzw. es sind zwei Zwischenschienen 621, 622 zur Ausbildung der Zwischenschiene 120 vorgesehen.

Analog zur Teleskopschiene 100 von Fig. 6 und Fig. 7 ist das Verbindungselement 422 über ein Befestigungselement 320 bevorzugt mittig an der ersten Führungsschiene 110 angeordnet. Das Verbindungselement 421 wird dabei vorzugsweise über ein dem zweiten Ende 102 der Teleskopschiene 100 zugewandtes Ende der Zwischenschiene 621 über eine Rolle 611 zu einem dem ersten Ende 101 der Teleskopschiene 100 zugewandten Ende der Zwischenschiene 622 umgeleitet bzw. an der Rolle 614 zur zweiten Führungsschiene 130 geführt. Das Verbindungselement 421 ist dabei bevorzugt an der zweiten Führungsschiene 130 über die Befestigungseinheit 410 befestigt.

Des Weiteren ist das Verbindungselement 422 bevorzugt an der ersten Führungsschiene 110 über die Befestigungseinheit 410 fixiert. Das Verbindungselement wird vorzugsweise über eine Rolle 612, die an einem dem ersten Ende 101 der Teleskopschiene 100 zugewandten Ende der Zwischenschiene 621 angeordnet ist, sowie über eine Rolle 613, die an einem dem zweiten Ende 102 der Teleskopschiene 100 zugewandten Ende der Zwischenschiene 622 angeordnet ist, zur zweiten Führungsschiene 130 geleitet. An der zweiten Führungsschiene 130 ist wiederrum das Verbindungselement 320 fixiert.

Es wird darauf hingewiesen, dass in Fig. 8 zeichnerisch der Eindruck entsteht, dass sich die Verbindungselemente 421, 422 an einer Stelle 610 zwischen den Zwischenschienen 621, 622 kreuzen. Dies ist jedoch nichtzutreffend und wird in Fig. 10 näher beschrieben, wobei klargestellt wird, dass sich die Verbindungselemente 421, 422 nicht an der Stelle 610 kreuzen.

Fig. 9 zeigt die Teleskopschiene 100 von Fig. 8 in der ausgefahrenen Position. Analog zu Fig. 7 wird auch hier eine der Führungsschienen 110, 130 fest angeordnet, wobei sich bei einem Verfahren in die ausgefahrene Position die zwei Zwischenschienen 621, 622 sowie die entsprechend andere der Führungsschienen 130, 110 verschieben bzw. verfahren lassen. Die Teleskopschiene 100 von Fig. 9 kann wiederrum eine beliebige Anzahl von Zwischenschienen 120 aufweisen, wie beispielhaft in Fig. 8 beschrieben, wobei die Zwischenschienen 120 jeweils zwei Rollen 212 aufweisen.

Fig. 10 zeigt die Stelle 610 von Fig. 8. Bevorzugt wird an dieser Stelle 610 durch eine außermittige Anordnung der Rollen 611, 612 an der Zwischenschiene 621, sowie analog hierzu der Rollen 613, 614 von Fig. 8 an der Zwischenschiene 622 von Fig. 8, eine Kreuzung der Verbindungselemente 421, 422 vermieden.

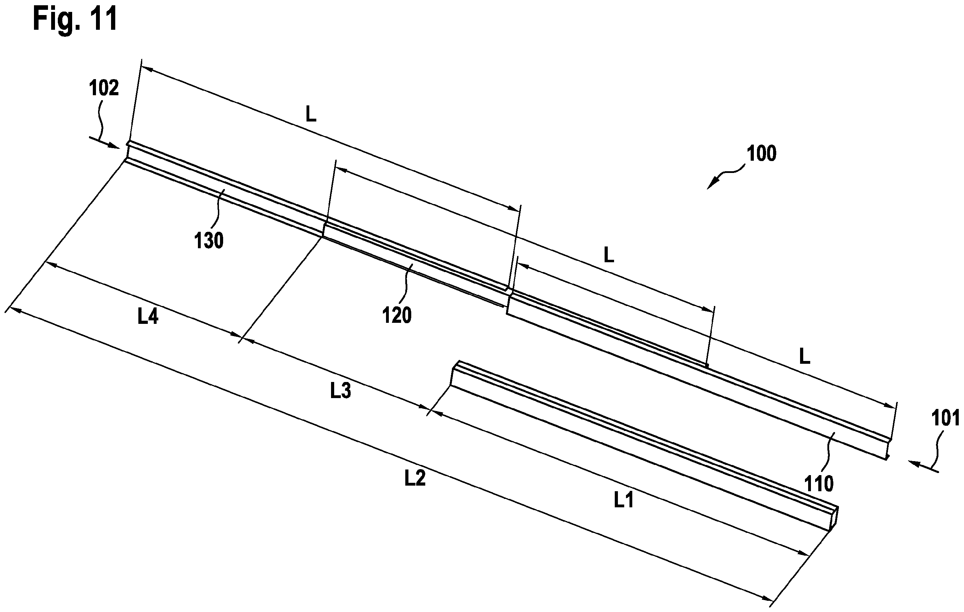

Fig. 11 zeigt die Teleskopschiene 100 von Fig. 1 in der zusammengefahrenen Position sowie in der ausgefahrenen Position. Bevorzugt weisen die erste und zweite Führungsschiene 110, 130 sowie die Zwischenschiene 120 jeweils eine Länge L auf, die einer ersten Länge L1 der Teleskopschiene 100 in der zusammengefahrenen Position entspricht.

Die Teleskopschiene 100 weist vorzugsweise in der ausgefahrenen Position eine zweite Länge L2 auf, die zumindest annähernd der doppelten ersten Länge L1 entspricht. Bevorzugt entspricht ein relativer Verfahrweg L3 zwischen der ersten Führungsschiene 110 und der Zwischenschiene 120 sowie ein relativer Verfahrweg L4 zwischen der zweiten Führungsschiene 130 und der Zwischenschiene 120 zum Verfahren der Teleskopschiene 100 von der zusammengefahrenen Position in die ausgefahrene Position, oder umgekehrt, jeweils zumindest annähernd der Hälfte der ersten Länge L1.

Somit kann bei halbem relativem Auszugsweg der Zwischenschiene 120 über die Länge L3 und der zweiten Führungsschiene 130 über die Länge L4 ein komplettes Ausziehen der Teleskopschiene 100 bei einem Vollauszug auf die Länge L2 erfolgen. Dabei wird lediglich eine Längenänderung der Länge L1 auf die Länge L1 plus L3 plus L4 benötigt.

## Patentansprüche

1. Teleskopschiene (100) mit einer ersten und einer zweiten Führungsschiene (110, 130) und mit einer Zwischenschiene (120), wobei die erste Führungsschiene (110) an einer ersten Laufbahn (235) der Zwischenschiene (120) zwangsgeführt ist und die zweite Führungsschiene (130) an einer zweiten, zur ersten Laufbahn (235) parallel verlaufenden Laufbahn (236) der Zwischenschiene (120) zwangsgeführt ist, **dadurch gekennzeichnet, dass** die erste und zweite Führungsschiene (110, 130) sowie die Zwischenschiene (120) über mindestens zwei längliche Verbindungselemente (220; 421, 422) bei einem Bewegen von einer zusammengefahrenen Position in eine ausgefahrene Position, oder umgekehrt, synchronisiert sind, wobei an der ersten Führungsschiene (110) ein erstes Ende (431) eines ersten Verbindungselements (421) sowie ein zweites Ende (432) eines zweiten Verbindungselements (422) und an der zweiten Führungsschiene (130) ein zweites Ende (432) des ersten Verbindungselements (421) sowie ein erstes Ende (431) des zweiten Verbindungselements (422) jeweils über zugeordnete Befestigungselemente (320, 410) fixiert sind, und wobei die zugeordneten Befestigungselemente (320, 410) als Verfahrwegsbegrenzung der ersten und zweiten Führungsschiene (110, 130) an der Zwischenschiene (120) in der ausgefahrenen Position ausgebildet sind.

2. Teleskopschiene nach Anspruch 1, **dadurch gekennzeichnet, dass** zumindest ein zugeordnetes Befestigungselement (320; 410) an einer der Zwischenschiene (120) zugewandten Längsseite (299) der ersten und/oder zweiten Führungsschiene (110, 130) angeordnet ist.

3. Teleskopschiene nach Anspruch 1 oder 2, **dadurch gekennzeichnet, dass** zumindest ein zugeordnetes Befestigungselement (320; 410) an der ersten und/oder zweiten Führungsschiene (110, 130) angeschraubt ist.

4. Teleskopschiene nach einem der vorhergehenden Ansprüche, **dadurch gekennzeichnet, dass** zumindest ein zugeordnetes Befestigungselement (320; 410) eine Ausnehmung (322) zur abschnittsweisen Aufnahme eines Endes (431, 432) des ersten und/oder zweiten Verbindungselements (220) aufweist.

5. Teleskopschiene nach einem der vorhergehenden Ansprüche, **dadurch gekennzeichnet, dass** an dem zweiten Ende (432) des ersten Verbindungselements (421) und/oder dem zweiten Ende (432) des zweiten Verbindungselements (422) eine Spannvorrichtung (395) zum manuellen Spannen des ersten und/oder zweiten Verbindungselements (220) vorgesehen ist.

6. Teleskopschiene nach Anspruch 5, **dadurch gekennzeichnet, dass** die erste und/oder zweite Führungsschiene (110, 130) im Bereich der Spannvorrichtung (395) eine Ausnehmung (390) zum Bedienen der Spannvorrichtung (395) aufweist.

7. Teleskopschiene nach einem der vorhergehenden Ansprüche, **dadurch gekennzeichnet, dass** das erste und/oder zweite Verbindungselement (220) nach Art eines Seils, eines Riemens und/oder einer Kette ausgebildet ist.

8. Teleskopschiene nach einem der vorhergehenden Ansprüche, **dadurch gekennzeichnet, dass** das erste und/oder zweite Verbindungselement (220) dazu ausgebildet ist, Druckkräfte und/oder Zugkräfte aufzunehmen.

9. Teleskopschiene nach einem der vorhergehenden Ansprüche, **dadurch gekennzeichnet, dass** die Zwischenschiene (120) an jedem ihrer Enden (441, 442) zumindest eine Rolle (212) zum Umlenken des ersten und/oder zweiten Verbindungselements (220) aufweist.

10. Teleskopschiene nach Anspruch 9, **dadurch gekennzeichnet, dass** die zumindest zwei Rollen (212) dazu ausgebildet sind, ein Drehmoment zu übertragen.

11. Teleskopschiene nach einem der vorhergehenden Ansprüche, **dadurch gekennzeichnet, dass** die erste und zweite Führungsschiene (110, 130) sowie die Zwischenschiene (120) jeweils eine Länge (L) aufweisen, die einer ersten Länge (L1) der Teleskopschiene (100) in der zusammengefahrenen Position entspricht, wobei die Teleskopschiene (100) in der ausgefahrenen Position eine zweite Länge (L2) aufweist, die zumindest annähernd der doppelten ersten Länge (L1) entspricht, und wobei ein relativer Verfahrweg zwischen der ersten Führungsschiene (110) und der Zwischenschiene (120) sowie der zweiten Führungsschiene (130) und der Zwischenschiene (120) zum Bewegen der Teleskopschiene (100) von der zusammengefahrenen Position in die ausgefahrene Position, oder umgekehrt, jeweils zumindest annähernd der Hälfte der ersten Länge (L3) entspricht.

12. Teleskopschiene nach einem der vorhergehenden Ansprüche, **dadurch gekennzeichnet, dass** die erste und zweite Führungsschiene (110, 130) jeweils über Wälzkörper (108) an der Zwischenschiene (120) geführt sind.

13. Teleskopschiene nach Anspruch 12, **dadurch gekennzeichnet, dass** die Wälzkörper (108) in einem Kugelkäfig angeordnet sind.

14. Teleskopschiene nach einem der vorhergehenden Ansprüche, **dadurch gekennzeichnet, dass** die Zwischenschiene (120) über eine direkte Anbindung mit einer translatorischen Bewegungseinheit (240) verbindbar ist.
